# EUROPÄISCHE PATENTSCHRIFT

(11) **EP 1 237 808 B1**
(45) Veröffentlichungstag und Bekanntmachung des Hinweises auf die Patenterteilung: **15.10.2003**
(21) Anmeldenummer: 00979630.1
(22) Anmeldetag: 28.11.2000
(51) Int. Cl.: B65H 41/00, B29C 63/10

(54) **VERFAHREN ZUM ABZIEHEN EINER SCHUTZFOLIE VON KALANDERBAHNEN UND VORRICHTUNG ZUR DURCHFÜHRUNG DESSELBEN**
METHOD FOR PULLING OFF A PROTECTIVE FILM FROM CALENDER WEBS AND A DEVICE FOR CARRYING OUT SAME
PROCEDE POUR RETIRER UN FILM PROTECTEUR D'UNE FEUILLE CALANDREE, ET DISPOSITIF POUR SA MISE EN OEUVRE

(30) Priorität: 15.12.1999 DE 19960342
(43) Veröffentlichungstag der Anmeldung: 11.09.2002
(73) Patentinhaber: Felix Böttcher GmbH & Co. KG, D-50933 Köln (DE)
(72) Erfinder: SEYFFARTH, Lothar, 04177 Leipzig (DE); MÜHLBERG, Manfred, 04439 Engelsdorf (DE); RIEDEL, Steffen, 04448 Wiederitzsch (DE)
(74) Vertreter: Werner, Hans-Karsten, Dr.Dipl.-Chem.
(86) Internationale Anmeldenummer: EP0011878
(87) Internationale Veröffentlichungsnummer: WO01044092

(56) Entgegenhaltungen:
- DE-A- 1 579 128
- DE-A- 1 800 051
- DE-A- 2 525 039
- GB-A- 2 147 236
- US-A- 4 580 738

## Beschreibung

Gegenstand der vorliegenden Erfindung ist ein Verfahren und eine Vorrichtung zum Abziehen einer Schutzfolie von vorgefertigten Kalanderbahnen elastomerer Materialien für hiermit zu beschichtende Walzen mit einem Metallkern.

Vorgefertigte Kalanderbahnen von elastomeren Materialien zur Beschichtung von Walzen werden in Rollenform geliefert und weisen eine Schutzfolie auf, die vor allem das Verkleben der einzelnen Bahnen des elastomeren Materials verhindern soll.

Diese Schutzfolie wurde bisher meistens von Hand auf ein entsprechend dimensionierten Tisch von zwei Personen abgezogen. Das damit freie Ende des elastomeren Materials wurde meistens angeschrägt, auf den zu beschichtenden Walzenkern gelegt, an gebügelt und mit einem schwenkbaren Druckbalken mit Rolle auf der Walze aufgedrückt. Der Walzenkern wurde dann gedreht bis mindestens eine Schicht, meistens jedoch mehrere Schichten des elastomeren Materials aufgetragen waren. Das letzte Ende des elastomeren Materials wurde gegebenenfalls nochmals angeschrägt und an die unteren Schichten angedrückt.

Das manuelle Abziehen der Schutzfolie erfordert nicht nur Geschick, sondern insbesondere bei größeren Kalanderbahnen körperliche Kraft. Bei der Beschichtung größerer Walzen mit größerem Durchmesser sind obendrein entsprechend dimensionierte Tische notwendig, die vor der Beschichtungsanlage aufgestellt und befestigt werden müssen.

Ferner beschreibt DE-A-1 579 128 ein Verfahren und eine Vorrichtung gemäß dem Oberbegriff der Ansprüche 1 und 3.

Die Erfindung hat sich die Aufgabe gestellt, das Abziehen der Schutzfolie von vorgefertigten Kalanderbahnen elastomerer Materialien für hiermit zu beschichtende Walzen mit einem Metallkern zu vereinfachen und darüber hinaus auch sicherer zu gestalten.

Diese Aufgabe wird nach Anspruch 1 dadurch gelöst, dass die Schutzfolie erst kurz vor dem Auftragen des elastomeren Materials auf dem Metallkern praktisch gleichzeitig abgezogen und auf einen nach oben verschwenkbaren mechanisch angetriebenen Spreizdorn mit Rutschkupplung aufgewickelt wird. Während des Betriebes wird der Spreizdorn im allgemeinen nach unten verschwenkt um einen günstigen Abzugswinkel für die Schutzfolie zu gewährleisten. In den Fertigungspausen ist es dann möglich, den Spreizdorn nach oben zu verschwenken und im unteren Teil die jeweiligen vorgefertigten Rollen der Kalanderbahnen einzusetzen, ohne dass dies durch den Spreizdorn behindert wird.

Die erfindungsgemäße Vorrichtung nach Anspruch 3 zum Abziehen einer Schutzfolie von vorgefertigten Kalanderbahnen elastomerer Materialien für hiermit zu beschichtende Walzen mit einem Metallkern auf einer Beschichtungsanlage weist somit zusätzlich eine drehbare Halterung für die Kalanderbahn und einen verschwenkbaren mechanisch angetriebenen Spreizdorn mit Rutschkupplung zum Aufwickeln der Schutzfolie auf.

Diese Vorrichtung ermöglicht es auf die entsprechenden Tische ganz zu verzichten und eine einwandfreie Beschichtung durchzuführen, ohne dass die Schutzfolien manuell abgezogen werden müssen. Die Beschichtungsanlage kann somit in Zukunft von einer Person allein bedient werden, ohne dass sie hierbei menschliche Kraft einsetzen muss, auch wenn die Rollenbreite beispielsweise ca. 1500 mm beträgt.

Das erfindungsgemäße Verfahren und die erfindungsgemäße Vorrichtung kann im übrigen vorteilhaft kombiniert werden mit dem Verfahren und der Vorrichtung gemäß der gleichzeitig eingereichten Patentanmeldung ("Verfahren zum Aufbringen einer vorgefertigten Haftmischung auf einer Walze und Vorrichtung zur Durchführung desselben"). Dieses Verfahren gestattet anstelle üblicher flüssiger Haftgrundierungen eine vorgefertigte Haftmischung mit abziehbarer Schutzfolie auf dem Walzenkern aufzubringen, wobei unmittelbar anschließend die Beschichtung mit dem elastomeren Material erfolgen kann.

Das erfindungsgemäße Verfahren und die erfindungsgemäß dafür zur Verfügung gestellte Vorrichtung ist aber ohne weiteres einsetzbar auch für Walzen, die aufgrund ihrer späteren Aufgabenstellung keine Haftmischung zwischen Metallkern und elastomerer Beschichtung erforderlich machen.

## Patentansprüche

1. Verfahren zum Abziehen einer Schutzfolie von vorgefertigten Kalanderbahnen elastomerer Materialien für hiermit zu beschichtenden Walzen mit einem Metallkern, **dadurch gekennzeichnet, dass** die Schutzfolie erst kurz vor dem Auftragen des elastomeren Materials auf dem Metallkern praktisch gleichzeitig abgezogen und auf einen nach oben verschwenkbaren, mechanisch angetriebenen Spreizdorn mit Rutschkupplung aufgewickelt wird.

2. Verfahren gemäß Anspruch 1, **dadurch gekennzeichnet, dass** der Spreizdorn während des Betriebes nach unten verschwenkt wird.

3. Vorrichtung zum Abziehen einer Schutzfolie von vorgefertigten Kalanderbahnen elastomerer Materialien für hiermit zu beschichtenden Walzen mit einem Metallkern auf einer Beschichtungsanlage, **dadurch gekennzeichnet, dass** die Vorrichtung zusätzlich eine drehbare Halterung für die Kalanderbahn und einen verschwenkbaren, mechanisch angetriebenen Spreizdorn mit Rutschkupplung zum Aufwickeln der Schutzfolie aufweist.

4. Vorrichtung gemäß Anspruch 3, **dadurch gekennzeichnet, dass** die Halterung für die Kalanderbahn und den mechanisch angetriebenen Spreizdorn in einer gewinkelten verschwenkbaren Halterung montiert sind.

## Claims

1. A method for peeling a release liner from prefabricated calender sheets of elastomeric materials for rollers having a metal core which are to be coated with said sheets, **characterized in that** said release liner is peeled off only immediately before the coating of the elastomeric material onto the metal core in a virtually simultaneous manner and wound on a mechanically driven expanding arbor with a friction clutch which can be swiveled upwards.

2. The method according to claim 1, **characterized in that** said expanding arbor is swiveled downwards during operation.

3. A device for peeling a release liner from prefabricated calender sheets of elastomeric materials for rollers having a metal core which are to be coated with said sheets on a coating installation, **characterized in that** said device additionally has a rotatable fixing means for the calender sheet and a swiveling mechanically driven expanding arbor with a friction clutch for winding up said release liner.

4. The device according to claim 3, **characterized in that** said fixing means for the calender sheet and said mechanically driven expanding arbor are mounted in an angular swiveling fixing means.

## Revendications

1. Procédé pour retirer un film de protection de bandes de calandre préfabriquées en matériaux élastomères, pour en recouvrir des rouleaux comportant un noyau métallique, **caractérisé en ce que** le film de protection n'est retiré que peu avant l'application du matériau élastomère sur le noyau métallique, pratiquement simultanément, puis est enroulé sur un mandrin extensible actionné mécaniquement, orientable vers le haut, pourvu d'un accouplement à friction.

2. Procédé selon la revendication 1, **caractérisé en ce que** le mandrin extensible est orienté vers le bas pendant l'exploitation.

3. Dispositif pour retirer un film de protection de bandes de calandre préfabriquées en matériaux élastomères pour en recouvrir des rouleaux comportant un noyau métallique dans une installation de revêtement, **caractérisé en ce que** le dispositif comporte en plus une fixation pivotante pour la bande de calandre et un mandrin extensible actionné mécaniquement, orientable vers le haut, pourvu d'un accouplement à friction, destiné à enrouler le film de protection.

4. Dispositif selon la revendication 3, **caractérisé en ce que** la fixation pivotante pour la bande de calandre et le mandrin extensible actionné mécaniquement sont disposés dans un support orientable coudé.
